# FASCICULE DE BREVET EUROPEEN

(11) **EP 2 526 317 B1**
(45) Date de publication et mention de la délivrance du brevet: **21.12.2016**
(21) Numéro de dépôt: 11705910.5
(22) Date de dépôt: 13.01.2011
(51) Int. Cl.: F16D 23/14

(54) **BUTEE D'EMBRAYAGE DE VEHICULE AUTOMOBILE EQUIPEE D'UN DISPOSITIF D'ETANCHEITE**
KRAFTFAHRZEUG-KUPPLUNGSAUSRÜCKLAGER MIT EINER ABDICHTVORRICHTUNG
MOTOR VEHICLE THROW-OUT BEARING PROVIDED WITH A SEALING DEVICE

(30) Priorité: 20.01.2010 FR 1000222
(43) Date de publication de la demande: 28.11.2012
(73) Titulaire: NTN-SNR Roulements, 74000 Annecy (FR)
(72) Inventeur: BERTHIER, Julien, F-74410 Saint Jorioz (FR)
(74) Mandataire: Sayettat, Julien Christian
(86) Numéro de dépôt international: PCT/FR2011/000019
(87) Numéro de publication internationale: WO 2011/089335

(56) Documents cités:
- WO-A1-2009/084355
- WO-A1-2009/145216
- DE-A1- 19 716 218
- FR-A5- 2 109 947
- FR-A5- 2 190 213
- GB-A- 1 254 821
- JP-U- 50 032 451
- US-A- 4 555 007

## Description

L'invention concerne une butée d'embrayage de véhicule automobile, ainsi qu'un système d'actionnement de l'embrayage d'un véhicule automobile comprenant un diaphragme, une telle butée et un dispositif de déplacement axial de ladite butée relativement audit diaphragme.

Le document US 4,555,007 divulgue une telle butée d'embrayage.

En particulier, le dispositif de déplacement axial de la butée peut être à commande hydraulique, notamment au moyen d'un piston, comme par exemple les dispositifs dénommés à commande concentrique hydraulique (CSC pour Concentric Slave Cylinder en anglais).

La butée comprend une bague tournante et une bague fixe pourvues chacune d'une piste de roulement formant entre elles un chemin de roulement à contact oblique dans lequel des corps roulants sont disposés pour guider la rotation de ladite bague tournante.

En particulier, notamment pour des raisons d'encombrement du dispositif à commande hydraulique, les butées d'embrayage utilisées dans de tels systèmes comprennent une bague extérieure tournante autour d'une bague intérieure fixe en rotation, ladite bague extérieure comprenant une portée d'actionnement par appui sur le diaphragme entre une position d'embrayage et une position de débrayage.

Par ailleurs, les butées d'embrayage sont classiquement équipées d'un dispositif d'étanchéité qui est prévu pour étanchéifier le côté arrière du chemin de roulement, notamment en limitant les fuites de lubrifiant présent dans le chemin de roulement ainsi que la contamination dudit chemin avec des polluants extérieurs.

Pour ce faire, on connaît l'utilisation d'un joint d'étanchéité qui est disposé dans un espace annulaire formé entre les bagues, ledit joint comprenant une armature solidarisée à une bague et une lèvre d'étanchéité souple en contact frottant sur l'autre bague.

Toutefois, le contact frottant utilisé dans cette réalisation présente notamment l'inconvénient d'induire un couple de frottement lors de la rotation relative des bagues et d'être sujet à une usure qui conduit dans le temps à une altération de la fonction d'étanchéité conférée.

En outre, dans l'application considérée, le matériau de la lèvre du joint d'étanchéité a tendance à se dégrader, notamment en perdant sa souplesse, du fait de l'exposition de la butée à des températures élevées qui peuvent être typiquement supérieures à 160°C. Il en résulte donc une altération des performances d'étanchéité au cours de la vie de la butée d'embrayage.

L'invention telle que définit dans la revendication 1 vise à résoudre les problèmes de l'art antérieur en proposant notamment une butée d'embrayage dans laquelle la fiabilité de la fonction d'étanchéité du chemin de roulement est maintenue dans le temps tout en limitant le couple induit.

A cet effet, et selon un premier aspect, l'invention propose une butée d'embrayage de véhicule automobile comprenant une bague tournante et une bague fixe pourvues chacune d'une piste de roulement formant entre elles un chemin de roulement à contact oblique dans lequel des corps roulants sont disposés pour guider la rotation de ladite bague tournante, lesdites bagues étant agencées pour former entre elles au moins un espace annulaire qui est disposé d'un côté du chemin de roulement, ledit espace annulaire étant équipé d'un dispositif d'étanchéité comprenant un déflecteur solidaire d'une bague, ledit déflecteur présentant deux portées qui s'étendent radialement dans l'espace annulaire en étant espacées axialement pour délimiter un logement annulaire, ledit dispositif d'étanchéité comprenant en outre un insert monté sur l'autre bague, ledit insert étant disposé dans le logement annulaire pour former une chicane en forme de U dont les branches sont délimitées entre respectivement une face interne d'une portée et une face externe dudit insert et dont la base est délimitée entre une face de fond du logement annulaire et une face d'extrémité libre dudit insert.

Selon un deuxième aspect, l'invention propose un système d'actionnement de l'embrayage d'un véhicule automobile comprenant un diaphragme, ledit système comprenant une telle butée qui est montée sur un dispositif de déplacement axial de ladite butée entre une position d'embrayage dans laquelle une portée d'actionnement de ladite butée est disposée contre le diaphragme et une position de débrayage dans laquelle ladite portée appuie sur ledit diaphragme.

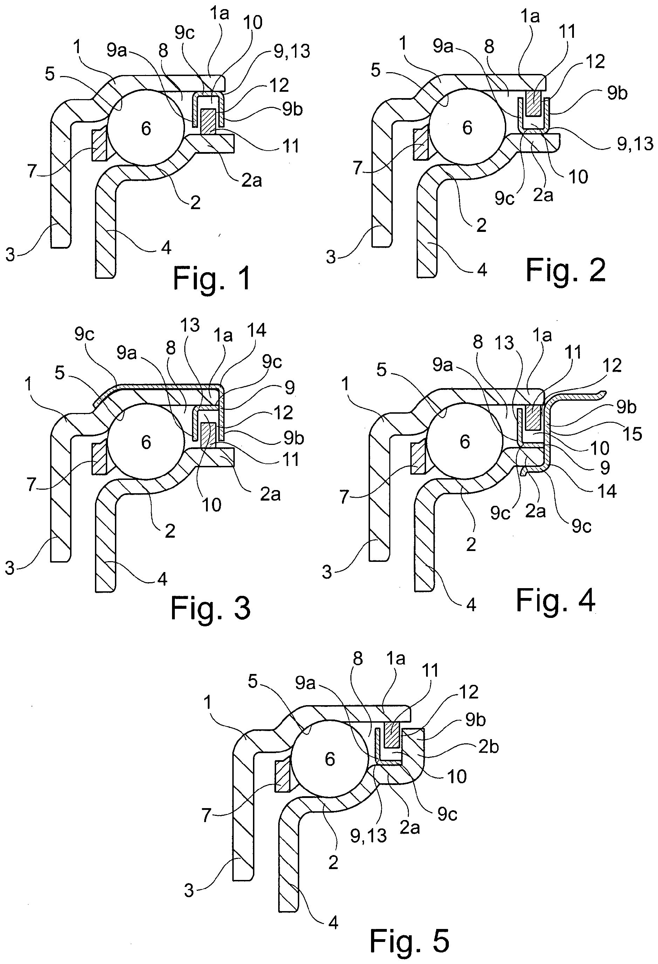

D'autres objets et avantages de l'invention apparaîtront dans la description qui suit, faite en référence aux figures annexées dans lesquelles les figures 1 à 5 sont des vues partielles en coupe longitudinale d'une butée d'embrayage selon respectivement un mode de réalisation de l'invention.

En relation avec les figures, on décrit ci-dessous une butée d'embrayage de véhicule automobile, ladite butée étant notamment destinée à être intégrée dans un système d'actionnement de l'embrayage d'un véhicule automobile comprenant un diaphragme (non représenté).

Dans une telle réalisation, le débrayage est réalisé par appui sur le diaphragme par l'intermédiaire de la butée. Pour ce faire, le système d'actionnement comprend un dispositif de déplacement axial de la butée entre une position d'embrayage et la position de débrayage. Par exemple, le dispositif de déplacement, de type à commande concentrique hydraulique, comprend un piston (non représenté).

La butée d'embrayage comprend une bague extérieure 1 tournante autour d'une bague intérieure 2 fixe en rotation, lesdites bagues étant réalisées en tôle emboutie pour présenter chacune une piste de roulement. En variante non représentée, la bague extérieure peut être fixe et la bague intérieure tournante. Dans la description, les termes de positionnement dans l'espace sont pris en référence à l'axe de rotation de la butée (horizontal sur les figures qui montrent un côté de la coupe, l'autre côté étant symétrique par rapport audit axe). En particulier, le terme « intérieur » est relatif à une disposition proche de cet axe et le terme « extérieur » est relatif à une disposition à distance de cet axe. Par ailleurs, les termes « avant » et « arrière » sont relatifs à une disposition par rapport au sens de déplacement de la butée vers la position de débrayage, à savoir à gauche sur les figures pour « avant » et à droite pour « arrière ».

La butée comprend également, solidaire de la bague tournante 1, une portée d'actionnement 3 par appui sur un diaphragme de l'embrayage. Dans le mode de réalisation représenté, la bague extérieure 1 comprend une portée radiale avant qui forme la portée d'actionnement 3.

Ainsi, le piston permet le déplacement de la butée depuis la position d'embrayage dans laquelle la portée d'actionnement 3 est disposée contre le diaphragme vers une position de débrayage dans laquelle ladite portée d'actionnement appuie sur ledit diaphragme.

Pour ce faire, la bague fixe 2 est montée, par exemple par l'intermédiaire d'un manchon et/ou d'une autre bague, sur le dispositif de déplacement axial. En outre, la butée peut comprendre un dispositif d'autocentrage de la bague fixe 2 par rapport au dispositif de déplacement axial, par exemple sous la forme d'une rondelle élastique qui est apte à générer un effort d'autocentrage entre une portée radiale avant 4 de la bague fixe 2 et le dispositif de déplacement axial.

Par ailleurs, en position d'embrayage, la portée d'actionnement 3 peut être disposée en précharge contre le diaphragme sans exercer un effort d'appui suffisant pour le débrayage et, en position de débrayage, la portée 3 appuie sur ledit diaphragme pour l'actionner. Pour ce faire, le système d'actionnement peut comprendre en outre un moyen de précontrainte formé d'un ressort (non représenté) qui exerce un effort axial de précharge sur la bague fixe 2, de sorte que la portée d'actionnement 3 en position d'embrayage soit disposée contre le diaphragme.

Les pistes de roulement forment entre elles un chemin de roulement 5 à contact oblique dans le sens d'application de l'effort de déplacement de la butée en position de débrayage. Par ailleurs, des corps roulants formés de billes 6 sont disposés dans le chemin de roulement 5 pour guider la rotation de la bague extérieure 1, et transmettre les efforts exercés sur chacune des bagues 1, 2. En outre, dans le mode de réalisation représenté, les billes 6 sont équiréparties dans le chemin de roulement 5 par l'intermédiaire d'une cage 7.

Les bagues 1, 2 sont agencées pour former entre elles un espace annulaire 8 qui est disposé d'un côté du chemin de roulement 5, ledit espace annulaire étant équipé d'un dispositif d'étanchéité. Dans les modes de réalisation représentés, chaque bague 1, 2 comprend une extension axiale 1a, 2a, lesdites extensions étant disposées radialement en regard pour former entre elles l'espace annulaire 8.

En particulier, l'espace annulaire 8 est formé sur le côté arrière du chemin de roulement 5 et le dispositif permet d'étanchéifier ledit côté arrière, notamment en limitant les fuites de lubrifiant présent dans le chemin de roulement 5 ainsi que la contamination dudit chemin avec des polluants extérieurs. Par ailleurs, la portée d'actionnement 3 est disposée sur le côté du chemin de roulement 5 qui est opposé au dispositif d'étanchéité.

Le dispositif d'étanchéité comprend un déflecteur 9 solidaire d'une bague 1, 2, ledit déflecteur présentant deux portées 9a, 9b qui s'étendent radialement dans l'espace annulaire 8 en étant espacées axialement pour délimiter un logement annulaire 10. Le dispositif d'étanchéité comprend en outre un insert 11 monté sur l'autre bague 2, 1, ledit insert étant disposé dans le logement annulaire 10 pour former une chicane 12 en forme de U dont les branches sont délimitées entre respectivement une face interne d'une portée radiale 9a, 9b et une face externe dudit insert et dont la base est délimitée entre une face de fond du logement annulaire 8 et une face d'extrémité libre dudit insert.

Ainsi, en prévoyant qu'un côté du chemin de roulement 5 soit équipé d'une chicane 12 en U formé entre un déflecteur 9 et un insert 11 qui sont en rotation relative, on limite les fuites de lubrifiant ainsi que la contamination dudit chemin, et ce sans induire de couple de frottement lors de la rotation relative des bagues 1, 2. En outre, la longueur de la chicane 12 permet de conférer une bonne étanchéité et sa largeur, c'est-à-dire le jeu entre les faces délimitant le U, est suffisante pour éviter qu'un couple de frottement apparaisse en cas de déformation du dispositif d'étanchéité sous l'effet des efforts subis par la butée.

En relations avec les figures, le déflecteur 9 comprend au moins une armature 13, 14, par exemple réalisé en matériau métallique, ladite armature présentant au moins une portée radiale 9a, 9b ainsi qu'une portée axiale 9c de solidarisation de ladite armature sur la bague 1, 2, notamment par emmanchement.

Par ailleurs, l'insert 11, par exemple réalisé à base d'un matériau polymérique, présente une géométrie annulaire, la face intérieure dudit insert étant montée sur la bague 1, 2 et sa face extérieure étant libre dans le logement annulaire 10. En particulier, l'insert 11 peut présenter une section sensiblement rectangulaire dont les dimensions sont inférieures à celles du logement annulaire 10 afin de former la chicane 12 en forme de U à l'interface entre ledit insert et ledit logement.

En outre, pour réduire encore le risque d'apparition d'un couple de frottement tout en fiabilisant l'étanchéité conférée, l'insert 11 peut être monté sur la bague 1, 2 avec possibilité de déplacement axial et/ou radial à l'intérieur du logement annulaire 10. Ainsi, la position de l'insert 11 dans le logement annulaire 10 peut s'adapter aux déformations de l'espace annulaire 8 sous l'effet des efforts subis par la butée ainsi qu'aux efforts induits par la force centrifuge de rotation relative entre le déflecteur 9 et l'insert 11. En particulier, la face intérieure de l'insert 11 peut être emmanchée avec une interférence réduite sur l'extension 1a, 2a et/ou présenter une géométrie biseautée pour limiter la surface d'emmanchement.

En relation avec les figures 1 et 2, le déflecteur 9 comprend une armature 13 unique en forme de U dont chaque branche forme une portée radiale 9a, 9b, la base dudit U formant la portée axiale 9c de solidarisation par emmanchement sur la face intérieure de l'extension 1a de la bague extérieure 1 (figure 1) ou sur la face extérieure de l'extension 2a de la bague intérieure 2 (figure 2). Par ailleurs, dans ces réalisations, la base du U délimite la face de fond du logement annulaire 10.

En relation avec les figures 3 et 4, le déflecteur 9 comprend deux armatures 13, 14 présentant chacune une portée radiale 9a, 9b, lesdites armatures étant solidarisées sur la bague extérieure 1 (figure 3) ou sur la bague intérieure 2 (figure 4) en formant le logement annulaire 10 entre leurs portées radiales 9a, 9b. En outre, la face de fond du logement annulaire 10 est formée sur la portée axiale 9c d'une armature 13, 14, à savoir sur la portée axiale 9c de l'armature avant 13 dans les modes de réalisation représentés.

Plus précisément, sur la figure 3, l'armature avant 13 est emmanchée sur la face intérieure de l'extension 1a de la bague extérieure 1 et l'armature arrière 14 est emmanchée sur la face extérieure de ladite bague, l'extrémité libre de la portée axiale 9c de l'armature avant 13 étant en contact sur la face avant de la portée radiale 9b de l'armature arrière 14.

Sur la figure 4, l'armature avant 13 est emmanchée sur la face extérieure de l'extension 2a de la bague intérieure 2 et l'armature arrière 14 est emmanchée sur la face intérieure de ladite bague, l'extrémité libre de la portée axiale 9c de l'armature avant 13 étant en contact sur la face avant de la portée radiale 9b de l'armature arrière 14.

Par ailleurs, sur la figure 4, la portée radiale 9b de l'armature arrière 14 présente une couronne 15 d'appui qui est agencée pour permettre, sur sa face arrière opposée au logement annulaire 10, l'appui du moyen de précontrainte de la butée.

En relation avec la figure 5, l'extension 2a de la bague intérieure 2 présente un repli radial 2b formant la portée radiale arrière 9b du déflecteur 9, ledit déflecteur comprenant une armature 13 présentant la portée radiale avant 9a et une portée axiale 9c d'emmanchement sur la face extérieure de l'extension 2a en formant le logement annulaire 10 entre lesdites portées.

## Revendications

1. Butée d'embrayage de véhicule automobile comprenant une bague tournante (1) et une bague fixe (2) pourvues chacune d'une piste de roulement formant entre elles un chemin de roulement (5) à contact oblique dans lequel des corps roulants (6) sont disposés pour guider la rotation de ladite bague tournante, lesdites bagues étant agencées pour former entre elles au moins un espace annulaire (8) qui est disposé d'un côté du chemin de roulement (5), ledit espace annulaire étant équipé d'un dispositif d'étanchéité, ladite butée étant telle que le dispositif d'étanchéité comprend un déflecteur (9) solidaire d'une bague (1, 2), ledit déflecteur présentant deux portées (9a, 9b) qui s'étendent radialement dans l'espace annulaire (8) en étant espacées axialement pour délimiter un logement annulaire (10), ledit dispositif d'étanchéité comprenant en outre un insert (11) monté sur l'autre bague (2, 1), ledit insert étant disposé dans le logement annulaire (10) pour former une chicane (12) en forme de U dont les branches sont délimitées entre respectivement une face interne d'une portée (9a, 9b) et une face externe dudit insert et dont la base est délimitée entre une face de fond du logement annulaire (10) et une face d'extrémité libre dudit insert,
**caractérisé en ce que**
ledit insert est disposé dans le logement annulaire (10) avec possibilité de déplacement axial et/ou radial à l'intérieur dudit logement annulaire.

2. Butée d'embrayage selon la revendication 1, **caractérisée en ce que** le déflecteur (9) comprend au moins une armature (13, 14) présentant au moins une portée radiale (9a, 9b), ladite armature présentant en outre une portée axiale (9c) de solidarisation sur la bague (1, 2).

3. Butée d'embrayage selon la revendication 1 ou 2, **caractérisée en ce que** chaque bague (1, 2) comprend une extension axiale (1a, 2a), lesdites extensions étant disposées radialement en regard pour former entre elles l'espace annulaire (8).

4. Butée d'embrayage selon la revendication 3, **caractérisée en ce qu'**une extension (2a) présente un repli radial (2b) formant une portée radiale (9b) du déflecteur (9).

5. Butée d'embrayage selon la revendication 2, **caractérisée en ce que** le déflecteur (9) comprend deux armatures (13, 14) présentant chacune une portée radiale (9a, 9b), lesdites armatures étant solidarisées sur la bague (1, 2) en formant le logement annulaire (10) entre leurs portées radiales (9a, 9b).

6. Butée d'embrayage selon la revendication 5, **caractérisée en ce que** la face de fond du logement annulaire (10) est formée sur la portée axiale (9c) d'une armature (13, 14).

7. Butée d'embrayage selon la revendication 5 ou 6, **caractérisée en ce que** la portée radiale (9b) d'une armature (14) est agencée pour permettre, sur sa face opposée au logement annulaire (10), l'appui d'un moyen de précontrainte de ladite butée.

8. Butée d'embrayage selon la revendication 2, **caractérisée en ce que** le déflecteur (9) comprend une armature (13) en forme de U dont chaque branche forme une portée radiale (9a, 9b), la base dudit U formant la portée axiale (9c) de solidarisation et délimitant la face de fond du logement annulaire (10).

9. Butée d'embrayage selon l'une quelconque des revendications 1 à 8, **caractérisé en ce que** l'insert (11) présente une géométrie annulaire, la face intérieure dudit insert étant montée sur la bague (1, 2) et sa face extérieure étant libre dans le logement annulaire (10).

10. Butée d'embrayage selon la revendication 1 à 9, **caractérisée en ce que** l'insert (11) est réalisé à base d'un matériau polymérique.

11. Butée d'embrayage selon l'une quelconque des revendications 1 à 10, **caractérisée en ce qu'**elle comprend en outre, solidaire de la bague tournante (1) sur le côté du chemin de roulement (5) qui est opposé au dispositif d'étanchéité, une portée d'actionnement (3) par appui sur un diaphragme de l'embrayage.

12. Système d'actionnement de l'embrayage d'un véhicule automobile comprenant un diaphragme, ledit système comprenant une butée selon la revendication 11 qui est montée sur un dispositif de déplacement axial de ladite butée entre une position d'embrayage dans laquelle la portée d'actionnement (3) est disposée contre le diaphragme et une position de débrayage dans laquelle ladite portée appuie sur ledit diaphragme.

## Patentansprüche

1. Ausrücklager eines Fahrzeugs, welches einen umlaufenden Ring (1) und einen stillstehenden Ring (2) umfasst, welche jeweils mit einer Rollbahn versehen sind, die zwischen sich einen schrägen Rollweg (5) bilden, in welchem Rollkörper (6) angeordnet sind, um die Drehung des besagten umlaufenden Rings zu führen, wobei die besagten Ringe beschaffen sind, um zwischen sich mindestens einen ringförmigen Raum (8) zu bilden, welcher auf einer Seite des Rollwegs (5) angeordnet ist, wobei der besagte ringförmige Raum mit einer Dichtungsvorrichtung ausgestattet ist, wobei das besagte Lager so ist, dass die Dichtungsvorrichtung einen Deflektor (9) umfasst, der fest mit einem Ring (1, 2) verbunden ist, wobei der besagte Deflektor zwei Erstreckungen (9a, 9b) aufweist, die sich radial in den ringförmigen Raum (8) erstrecken, wobei sie axial beabstandet sind, um eine ringförmige Aufnahme (10) zu begrenzen, wobei die besagte Dichtungsvorrichtung des Weiteren eine Einlage (11) umfasst, welche auf dem anderen Ring (2, 1) montiert ist, wobei die besagte Einlage in der ringförmigen Aufnahme (10) angeordnet ist, um eine U-förmige Schikane (12) zu bilden, deren Schenkel zwischen jeweils einer Innenfläche einer Erstreckung (9a, 9b) und einer Außenfläche der besagten Einlage begrenzt sind und deren Basis zwischen einer Bodenfläche der ringförmigen Aufnahme (10) und einer freien Endfläche der besagten Einlage begrenzt ist, **dadurch gekennzeichnet, dass** die besagte Einlage in der ringförmigen Aufnahme (10) mit der Möglichkeit zur axialen und/oder radialen Bewegung im Inneren der besagten ringförmigen Aufnahme angeordnet ist.

2. Ausrücklager nach Anspruch 1, **dadurch gekennzeichnet, dass** der Deflektor (9) mindestens eine Bewehrung (13, 14) umfasst, welche mindestens eine radiale Erstreckung (9a, 9b) aufweist, wobei die besagte Bewehrung des Weiteren eine axiale Befestigungserstreckung (9c) an dem Ring (1, 2) umfasst.

3. Ausrücklager nach Anspruch 1 oder 2, **dadurch gekennzeichnet, dass** jeder Ring (1, 2) eine axiale Verlängerung (1a, 2a) umfasst, wobei die besagten Verlängerungen radial gegenüberliegend angeordnet sind, um zwischen sich den ringförmigen Raum (8) zu bilden.

4. Ausrücklager nach Anspruch 3, **dadurch gekennzeichnet, dass** eine Verlängerung (2a) eine radiale Biegung (2b) aufweist, welche eine radiale Erstreckung (9b) des Deflektors (9) bildet.

5. Ausrücklager nach Anspruch 2, **dadurch gekennzeichnet, dass** der Deflektor (9) zwei Bewehrungen (13, 14) umfasst, welche jeweils eine radiale Erstreckung (9a, 9b) aufweisen, wobei die besagten Bewehrungen fest an dem Ring (1, 2) befestigt sind, wobei sie die ringförmige Aufnahme (10) zwischen ihren radialen Erstreckungen (9a, 9b) bilden.

6. Ausrücklager nach Anspruch 5, **dadurch gekennzeichnet, dass** die Bodenfläche der ringförmigen Aufnahme (10) an der axialen Erstreckung (9c) einer Bewehrung (13, 14) gebildet ist.

7. Ausrücklager nach Anspruch 5 oder 6, **dadurch gekennzeichnet, dass** die radiale Erstreckung (9b) einer Bewehrung (14) beschaffen ist, um auf ihrer Fläche gegenüber der ringförmigen Aufnahme (10) die Auflage eines Vorspannmittels des besagten Lagers zu gestatten.

8. Ausrücklager nach Anspruch 2, **dadurch gekennzeichnet, dass** der Deflektor (9) eine U-förmige Bewehrung (13) umfasst, von der jeder Schenkel eine radiale Erstreckung (9a, 9b) bildet, wobei die Basis des besagten U die axiale Befestigungserstreckung (9c) bildet und die Bodenfläche der ringförmigen Aufnahme (10) begrenzt.

9. Ausrücklager nach einem der Ansprüche 1 bis 8, **dadurch gekennzeichnet, dass** die Einlage (11) eine ringförmige Geometrie aufweist, wobei die Innenfläche der besagten Einlage an dem Ring (1, 2) montiert ist und wobei ihre Außenfläche in der ringförmigen Aufnahme (10) frei ist.

10. Ausrücklager nach Anspruch 1 bis 9, **dadurch gekennzeichnet, dass** die Einlage (11) auf Basis eines polymeren Materials ausgeführt ist.

11. Ausrücklager nach einem der Ansprüche 1 bis 10, **dadurch gekennzeichnet, dass** es des Weiteren, fest mit dem umlaufenden Ring (1) auf der Seite des Rollweges (5) verbunden, die der Dichtvorrichtung gegenüberliegt, eine Betätigungserstreckung (3) durch Auflage auf einer Kupplungsmembran umfasst.

12. Fahrzeugkupplungs-Betätigungssystem, welches eine Membran umfasst, wobei das besagte System ein Lager nach Anspruch 11 umfasst, welches auf einer axialen Bewegungsvorrichtung des besagten Lagers montiert ist zwischen einer Einkupplungsposition, in welcher die Betätigungserstreckung (3) gegen die Membran angeordnet ist, und einer Auskupplungsposition, in welcher die besagte Erstreckung auf der besagten Membran aufliegt.

## Claims

1. Motor vehicle throw-out bearing comprising a rotating ring (1) and a fixed ring (2) each provided with a rolling track forming between them an oblique-contact rolling path (5) in which rolling bodies (6) are placed to guide the rotation of said rotating ring, said rings being arranged to form between them at least one annular space (8) that is placed on one side of the rolling path (5), said annular space being provided with a sealing device, said release bearing being such that the sealing device comprises a deflector (9) secured to a ring (1, 2), said deflector having two surfaces (9a, 9b) that extend radially in the annular space (8) while being spaced apart axially to delimit an annular housing (10), said sealing device also comprising an insert (11) mounted on the other ring (2, 1), said insert being placed in the annular housing (10) to form a U-shaped baffle (12), whose arms are delimited between respectively an internal face of a surface (9a, 9b) and an external face of said insert and whose the base is delimited between a bottom face of the annular housing (10) and a free end face of said insert, **characterised in that** said insert is arranged in the annular housing (10) with the possibility of axial and / or radial movement inside of said annular housing.

2. Throw-out bearing according to claim 1, **characterised in that** the deflector (9) comprises at least one frame (13, 14) having at least one radial surface (9a, 9b), said frame also having an axial surface (9c) for securing on the ring (1, 2).

3. Throw-out bearing according to claim 1 or 2, **characterised in that** each ring (1, 2) comprises an axial extension (1a, 2a), said extensions being placed radially opposite to form between them the annular space (8).

4. Throw-out bearing according to claim 3, **characterised in that** an extension (2a) has a radial fold (2b) forming a radial surface (9b) of the deflector (9).

5. Throw-out bearing according to claim 2, **characterised in that** the deflector (9) comprises two frames (13, 14) each having a radial surface (9a, 9b), said frames being secured to the ring (1, 2) by forming the annular housing (10) between their radial surfaces (9a, 9b).

6. Throw-out bearing according to claim 5, **characterised in that** the bottom face of the annular housing (10) is formed on the axial surface (9c) of a frame (13, 14).

7. Throw-out bearing according to claim 5 or 6, **characterised in that** radial surface (9b) of a frame (14) is arranged to allow, on its face opposite to the annular housing (10), the abutment of a means for pre-stressing said bearing.

8. Throw-out bearing according to claim 2, **characterised in that** the deflector (9) comprises a U-shaped frame (13), whose each arm forms a radial surface (9a, 9b), the base of said U forming the axial surface (9c) for securing and delimiting the bottom face of the annular housing (10).

9. Throw-out bearing according to any one of claims 1 to 8, **characterised in that** the insert (11) has an annular geometry, the internal face of said insert being mounted on the ring (1, 2) and its external face being free in the annular housing (10).

10. Throw-out bearing according to claim 1 to 9, **characterised in that** the insert (11) is produced from a polymeric material.

11. Throw-out bearing according to any one of claims 1 to 10, **characterised in that** it also comprises, secured to the rotating ring (1) on the side of the rolling path (5) that is opposite to the sealing device, a surface (3) for actuation by abutment on a diaphragm of the clutch.

12. System for actuating the clutch of a motor vehicle comprising a diaphragm, said system comprising a throw-out bearing according to claim 11 that is mounted on a device for axial movement of said bearing between a clutch position in which the actuation surface (3) is placed against the diaphragm and a release position in which said surface bears on said diaphragm.
